# EUROPÄISCHE PATENTSCHRIFT

(11) **EP 3 838 674 B1**
(45) Veröffentlichungstag und Bekanntmachung des Hinweises auf die Patenterteilung: **07.12.2022**
(21) Anmeldenummer: 20213978.8
(22) Anmeldetag: 15.12.2020
(51) Int. Cl.: B60R 3/02

(54) **AUSFAHRBARE TRITTSTUFE**
RETRACTABLE STEP
MARCHE RÉTRACTABLE

(30) Priorität: 20.12.2019 DE 202019107144 U
(43) Veröffentlichungstag der Anmeldung: 23.06.2021
(73) Patentinhaber: GA Actuation Systems GmbH, 6277 Zellberg (AT)
(72) Erfinder: Sailer, Wolfgang, 6290 Mayrhofen (AT); Hofer-Haas, Christoph, 6272 Kaltenbach (AT); Kainzner, Christoph, 6284 Ramsau (AT); Dornauer, Benedikt, 6292 Finkenberg (AT)
(74) Vertreter: ERNICKE Patent- und Rechtsanwälte PartmbB

(56) Entgegenhaltungen:
- EP-A1- 2 216 202
- JP-A- 2006 347 233
- JP-A- 2016 188 031
- US-A1- 2006 255 558

## Beschreibung

Die Erfindung betrifft eine ausfahrbare Trittstufe mit den Merkmalen im Oberbegriff des Hauptanspruchs.

Eine solche ausfahrbare Trittstufe ist aus der JP 2016-188031 A bekannt. Die Lenker sind mit aufrechten hinteren Schwenkachsen unter einer Tragplatte hängend gelagert.

Die JP 2006-347233 A1 zeigt eine ausfahrbare Trittstufe, gemäß dem Oberbegriff des Anspruchs 1, die beim Schwenken eine überlagerte Höhenbewegung ausführt. Die US 2006/0255558 A1 lehrt eine Trittstufe, deren Lenker ebenfalls mit aufrechten hinteren Schwenkachsen unter einer plattenförmigen Tragstruktur hängend gelagert sind.

Andere ausfahrbare Trittstufen sind aus der EP 2 216 202 A1 und DE 43 37 781 A1 bekannt.

Es ist Aufgabe der vorliegenden Erfindung, eine verbesserte ausfahrbare Trittstufe aufzuzeigen.

Die Erfindung löst diese Aufgabe mit den Merkmalen im Hauptanspruch.

Die beanspruchte ausfahrbare Trittstufe hat verschiedene Vorteile.

Die ausfahrbare Trittstufe ist robust und unempfindlich, hat einen niedrigen Bau- und Steueraufwand und ist kostengünstig. Sie hat eine hohe mechanische Stabilität und Belastbarkeit. Die beanspruchte ausfahrbare Trittstufe braucht außerdem wenig Platz. Sie hat auch eine einfache Kinematik für die Bewegung von der Ruhestellung in die Betriebsstellung und zurück.

Die ausfahrbare Trittstufe kommt mit einem einfachen Lenkergetriebe und mit wenigen Lenkern aus. Die aufrechten Schwenkachsen bieten eine hohe Stabilität und bessere Lagergeometrie sowie Abstützmöglichkeit für die Trittbelastungen. Es sind auch weniger Lager erforderlich, die zudem durch die aufrechten Schwenkachsen geringer belastet sind und robuster ausgeführt werden können als die liegenden Schwenkachsen beim Stand der Technik.

Auch die Antriebstechnik für die Bewegungen der Trittstufe und ihres Trittelements ist einfach und widerstandsfähig. Sie kommt mit geringen Kräften aus. Hierfür ist die beanspruchte und liegende Schwenkbewegung in der Hauptebene des Trittelements von Vorteil. Der Antrieb baut flach und kompakt und lässt sich platzsparend an der Ausfahrvorrichtung unterbringen. Die beanspruchte ausfahrbare Trittstufe kann einen eigenen Aktor und einen eigenen Antrieb aufweisen, die am Gestell angeordnet und abgestützt sind.

Das beanspruchte Parallelogrammgetriebe kann mit zwei parallelen Lenkern und entsprechend wenigen Schwenkachsen und Lagern auskommen. Die Lenker werden in der Ruhestellung und in der ausgefahrenen Betriebsstellung am Gestell abgestützt, was die Schwenkachsen und Lager entlastet. Die Abstützung kann Vertikalkräfte aufnehmen und formschlüssig sein. Lokale Stützhülsen oder andere reibungsarme und mechanisch stabile Elemente an den Lenkern und/oder Tragprofilen können eine Gleit- und Abstützhilfe sein.

Die Lenker können eine 180°-Drehung bei ihrer Bewegung zwischen der Ruhestellung und der Betriebsstellung ausführen. Diese lässt sich leicht und einfach steuern und ggf. sensorisch erfassen. Sie kann durch Anschlag der Lenker am Tragrahmen des Gestells, insbesondere an dessen Tragprofilen, begrenzt werden. Die 180°-Drehung ermöglicht große Abstände zwischen Ruhe- und Betriebsstellung des Trittelements bei kleiner Lenkerlänge und kompakter Bauform der ausfahrbaren Trittstufe. Andererseits können der seitliche Versatz des Trittelements auf seiner Bewegungsbahn und die Störkontur klein sein. Trotz großer Abstände zwischen der Ruhe- und Betriebsstellung des Trittelements benötigt die beanspruchte Trittstufe in Montagestellung nur wenig Platz in Richtung zur Fahrzeugmitte.

Die seitlich offene und bevorzugt im Wesentlichen U-förmige Profilform der Tragprofile des Tragrahmens sowie die im Wesentlichen U-förmige oder rohrförmige Profilform der Rahmenprofile des Trittelements und der Lenker haben Vorteile hinsichtlich Stabilität, Lagerausbildung und Unempfindlichkeit gegen äußere Umwelteinflüsse und Korrosion. Die Schwenkachsen und die Lager können sich durch die beabstandeten und im Wesentlichen parallelen Schenkel der Profile erstrecken. Hierdurch ergeben sich eine große Stützlänge und hohe Belastbarkeit der Lager und Schwenkachsen. Alternativ sind andere Formgebungen, insbesondere Profilformen, der Tragprofile, Rahmenprofile und Lenker möglich.

Das Trittelement kann hängend an der Unterseite der Lenker angeordnet sein. Die Schwenkachsen und Lager zur Verbindung des vorderen Lenkerendes mit dem Trittelement können am hinteren Randbereich des Trittelements angeordnet sein. Das Trittelement kann in der Betriebsstellung weit nach vorn ausfahren und viel Platz bzw. eine große Trittfläche bieten. Zur Abstützung dieser großen Kraglänge ist eine stützende und versenkte Aufnahme der Lenker in den Tragprofilen von Vorteil.

Durch die hängende Anordnung des Trittelements und dessen Verschwenkung in seiner Hauptebene benötigt die ausfahrbare Trittstufe nur wenig Platz in der Höhe. Auch der Platzbedarf in der Tiefe ist gering. Hierfür ist die 180°-Drehung der Lenker von Vorteil. Ferner ist die Anordnung der hinteren Schwenkachsen der Lenker im mittleren Bereich des Tragrahmens bzw. seiner Tragprofile von Vorteil.

Auch der Antrieb kann platzsparend untergebracht werden. Die Antriebskräfte können auf den einen Lenker direkt oder über eine Rutschkupplung eingeleitet werden. Sie können auf den oder die anderen Lenker durch eine Synchronisiereinrichtung aufwandsarm und effektiv sowie synchron übertragen werden. Die Synchronisiereinrichtung ist bevorzugt als spielarmer Kurbeltrieb ausgebildet. Alternativ ist eine Ausbildung mit Synchronriemen oder auf andere Weise möglich.

Für die Anordnung und Gestaltung des Antriebs gibt es verschiedene Möglichkeiten. Dies schließt die Möglichkeit eines motorischen Antriebs oder eines manuellen Antriebs ein. Ein flachbauender Antrieb kann an der Oberseite das Gestells, insbesondere des Tragrahmens, angeordnet sein. Der Antrieb, insbesondere sein bevorzugt elektrischer Motor und sein evtl. vorhandenes Vorschaltgetriebe, kann aber auch innerhalb des Tragrahmens angeordnet sein, was eine flachere Bauform der Trittstufe ermöglicht und mehr Freiheiten in der Antriebskonstruktion bietet.

Ferner kann die erwähnte Rutschkupplung vorhanden sein. Diese bietet Schutz gegen Fehlbedienung oder Missbrauch und schützt auch vor Verletzung. Sie mindert zudem den Steueraufwand. Das Anfahren der Endstellungen der Lenker muss nicht präzise erfolgen. Ein Nachlaufen des Antriebs ist unschädlich. Die Rutschkupplung kann auch entfallen. Bei Überlastung kann ein entsprechend ausgelegter Antrieb stehen bleiben.

Die ausfahrbare Trittstufe eignet sich besonders für Straßenfahrzeuge. Sie kann an einer Einstiegstelle des Straßenfahrzeugs platzsparend untergebracht werden. Durch die niedrige Bauhöhe ist auch die Einstellung der gewünschten Stufenhöhe oder Tritthöhe auf einfache und effektive Weise möglich. Die Bodenfreiheit wird gewahrt. Das Straßenfahrzeug kann ein motorisiertes Wohnmobil oder ein Wohnwagenanhänger sein, der von einem motorisierten Zugfahrzeug im Gespannbetrieb gezogen wird.

In den Unteransprüchen sind weitere vorteilhafte Ausgestaltungen der Erfindung angegeben.

Die beanspruchte ausfahrbare Trittstufe kann folgende weitere vorteilhafte Ausgestaltungen und Merkmale aufweisen, die einzeln oder in Kombination eingesetzt werden können.

Zwischen den vorderen Schwenkachsen der Lenker und dem Trittelement kann jeweils ein Achswinkel α von 90° oder weniger vorgesehen sein.

Das Trittelement kann einen Rahmen mit seitlichen und nach innen offenen, im wesentlichen U-förmigen Rahmenprofilen und einer dort aufgenommenen Trittplatte aufweisen. Die vorderen Schwenkachsen der Lenker können an einem Rahmenprofil des Trittelements angeordnet sein. Die Schwenkachsen zur Verbindung des vorderen Lenkerendes mit dem Trittelement können am hinteren Randbereich des Trittelements angeordnet sein.

Das Gestell der ausfahrbaren Trittstufe weist einen Tragrahmen mit parallelen Tragprofilen auf, an denen die hinteren Schwenkachsen der Lenker angeordnet sind. Die Schwenkachsen können im mittleren Bereich der Tragprofile angeordnet sein. Die seitlich voneinander distanzierten Tragprofile können durch Querträger miteinander verbunden werden. Der Aktor kann am Gestell bzw. Tragrahmen angeordnet und abgestützt sein.

Die Lenker und parallele Tragprofile des Gestells oder Tragrahmens können derart aufeinander abgestimmt sein, dass die Lenker, insbesondere mit ihren vorderen Schwenkachsen, in der Ruhestellung und der Betriebsstellung stirnseitig aus den Tragprofilen ragen.

Die aufrechten Schwenkachsen der Lenker können von vorderen und hinteren Lagern gebildet werden. Die vorderen und hinteren Lager können jeweils einen die Profile der Lenker und ggf. der Tragprofile durchsetzenden aufrechten Lagerbolzen und Lagerhülsen an den Schenkeln der besagten Profile aufweisen. Die vorderen Lager für das Trittelement können jeweils eine im Lenker angeordnete Stützhülse aufweisen.

Der Aktor kann einen bevorzugt motorischen, insbesondere elektromotorischen, Antrieb und eine Synchronisiereinrichtung aufweist, welche mit den hinteren Schwenkachsen der Lenker verbunden ist. Diese Schwenkachsen können die als Treibachsen ausgebildet sein. Die Synchronisiereinrichtung kann als Kurbeltrieb ausgebildet sein, der eine Treibstange und eine mit der Abtriebswelle des Antriebs verbundene Kurbel aufweist. Die Kurbel kann ein mit der Abtriebswelle des Antriebs verbundenes Ritzel und ein damit kämmendes und mit einer Treibachse sowie der Treibstange verbundenes Treibrad aufweisen. Die Abtriebswelle kann mit einer Treibachse direkt treibend, insbesondere drehfest, oder mittels einer zwischengeschalteten Rutschkupplung verbunden sein.

Die Ausfahrvorrichtung der beanspruchten Trittstufe, insbesondere das Gestell, kann für eine hängende Anordnung an der Unterseite einer Fahrzeugkarosserie eines Straßenfahrzeugs, insbesondere eines motorisierten Wohnmobils oder oder eines Wohnwagenanhängers, ausgebildet sein.

Die Erfindung ist in den Zeichnungen beispielhaft und schematisch dargestellt. Im Einzelnen zeigen:
- Figur 1:: Eine ausfahrbare Trittstufe in einer ersten Variante und in perspektivischer Darstellung der ausgefahrenen Betriebsstellung,
- Figur 2:: die Trittstufe von Figur 1 in teilweise transparenter Darstellung und in Betriebsstellung,
- Figur 3:: die Trittstufe von Figur 2 in eingefahrener Ruhestellung,
- Figur 4:: eine perspektivische Unteransicht der Trittstufe von Figur 1,
- Figur 5:: eine perspektivische geschnittene Seitenansicht der Trittstufe von Figur 1,
- Figur 6:: eine Draufsicht auf die Trittstufe von Figur 1 in verschiedenen Stellungen,
- Figur 7 und 8:: Seitenansichten der Trittstufe von Figur 1 in Betriebsstellung und in Ruhestellung,
- Figur 9:: eine abgebrochene und vergrößerte perspektivische Detailansicht des Aktors der Trittstufe von Figur 1,
- Figur 10:: eine zweite Variante der Trittstufe in der ausgefahrenen Betriebsstellung,
- Figur 11:: einen abgebrochene und vergrößerte perspektivische Detailansicht des Aktors der Trittstufe von Figur 10,
- Figur 12:: einen Aktor mit einer Rutschkupplung,
- Figur 13 und 14:: Seitenansichten der Trittstufe von Figur 1 mit einem anderen Achswinkel in Betriebsstellung und in Ruhestellung und
- Figur 15 und 16:: Einbausituationen am Fahrzeug von einer ausfahrbaren Trittstufe mit unterschiedlichen Achswinkeln.

Die Erfindung betrifft eine ausfahrbare Trittstufe (1) für ein Straßenfahrzeug (2), insbesondere ein motorisiertes Wohnmobil oder einen Wohnwagenanhänger. Die Erfindung betrifft ferner ein mit einer solchen Trittstufe (1) ausgerüstetes Straßenfahrzeug (2).

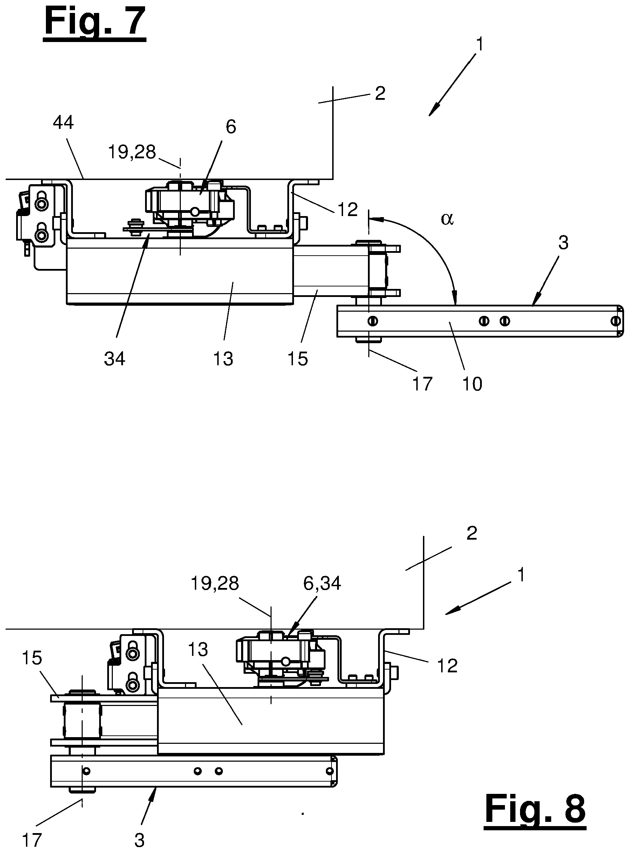

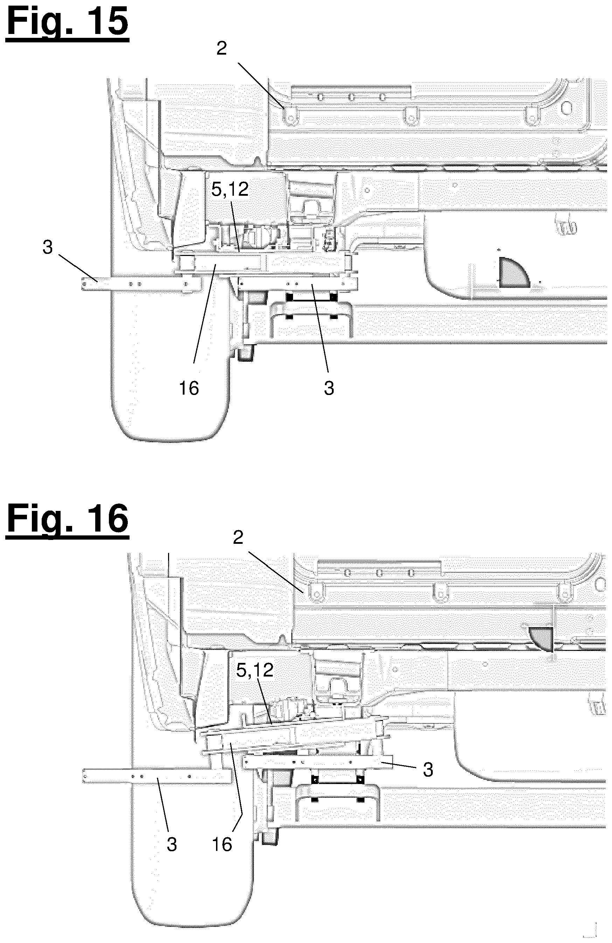

Ein Straßenfahrzeug (2) und dessen Fahrzeugkarosserie sind in Figur 15 und 16 ausschnittsweise und in Figur 7 und 8 schematisch angedeutet. Die ausfahrbare Trittstufe (1) kann z.B. an einer Einstiegstelle des Straßenfahrzeugs (2) in hängender Lage an der Unterseite einer Fahrzeugkarosserie angeordnet sein. Figur 7 und 8 sowie Figur 15 und 16 verdeutlichen diese Anordnung. Alternativ kann die gezeigte Anordnung von Figur 7 und 8 umgedreht werden, so dass die Unterseite der Trittstufe (1) nach oben weist.

Das Straßenfahrzeug (2) kann in der vorerwähnten Weise ein Wohnmobil, ein Verkaufs- oder Präsentationsfahrzeug oder dgl. mit einem entsprechenden und begehbaren, z.B. kastenartigen Aufbau ausgebildet sein. Das Wohnmobil oder dgl. kann mittels eines Fahrantriebs mit einem Motor, z.B. Elektromotor, Verbrennungsmotor, Wasserstoffmotor oder dgl., ausgerüstet sein. In einer anderen Ausführung kann das Straßenfahrzeug (2) als Anhänger ausgeführt sein, insbesondere als Wohnwagenanhänger, Verkaufsanhänger oder dgl. mit einem begehbaren kastenartigen Aufbau und einer Einstiegstelle.

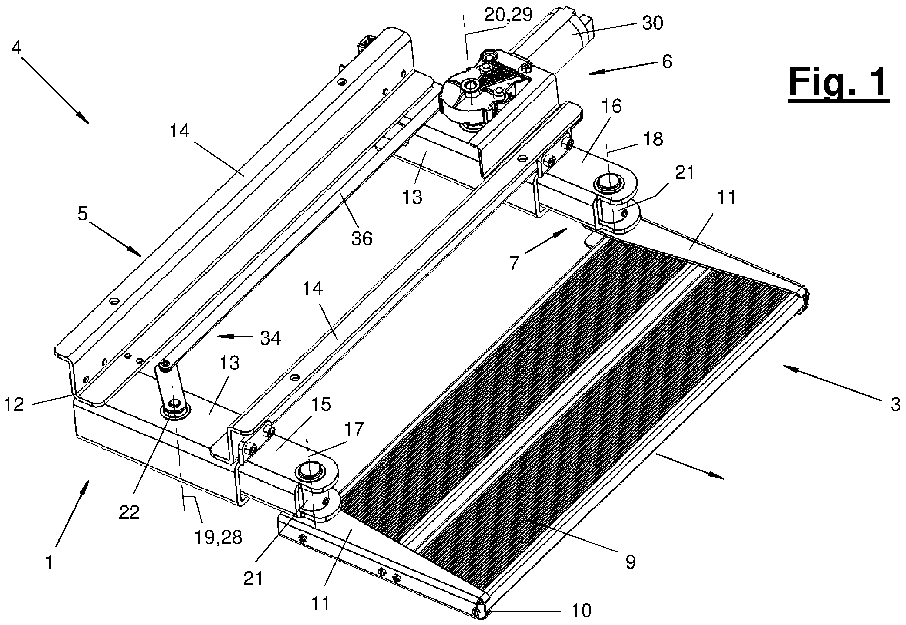

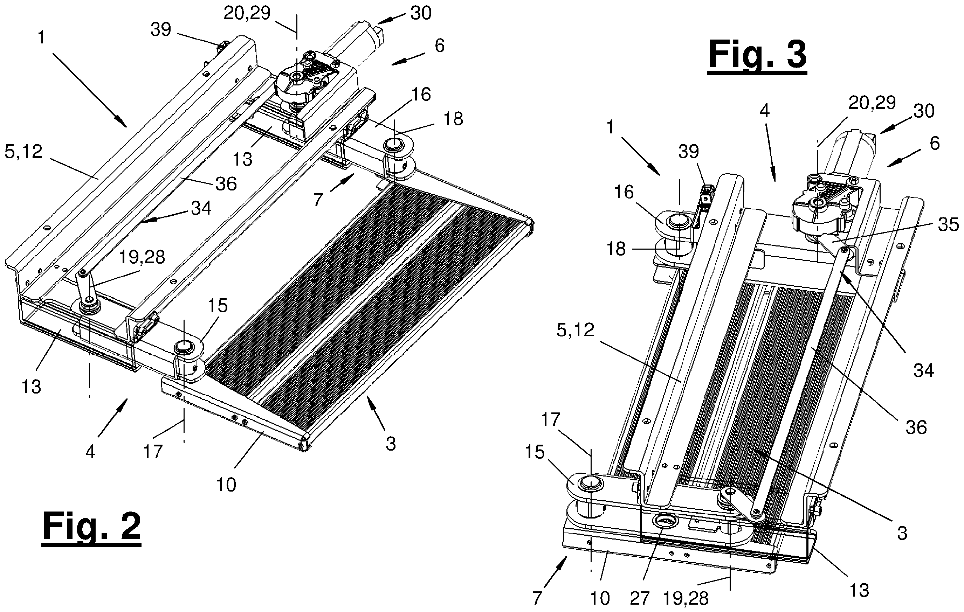

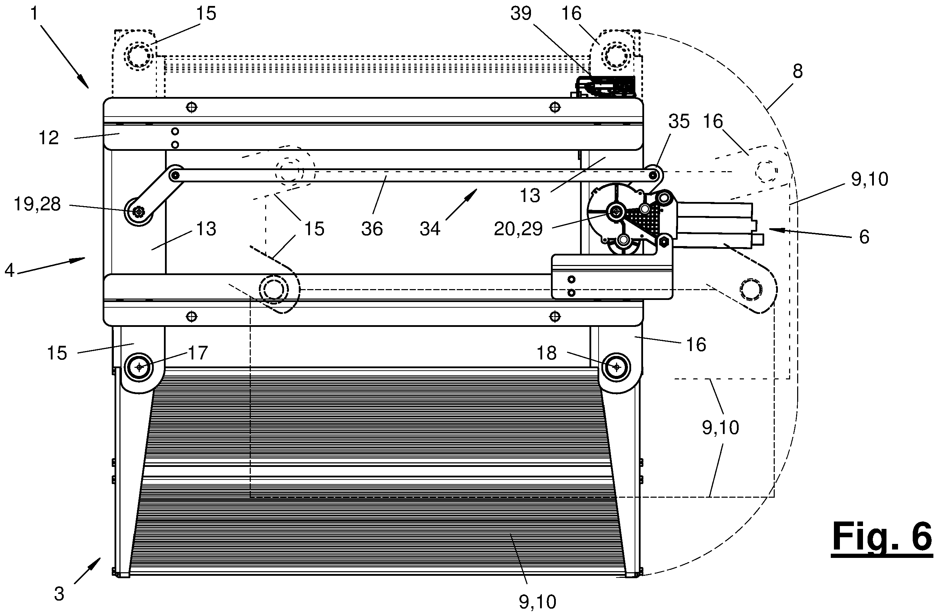

Figur 1 bis 9 und Figur 10 und 11 zeigen eine ausfahrbare Trittstufe (1) in zwei Varianten. Figur 1, 2 und 4 bis 7 sowie Figur 10 zeigen dabei jeweils die ausgefahrene Betriebstellung. Die eingefahrene Ruhestellung ist in Figur 3 und 8 dargestellt. Figur 6 verdeutlicht in durchgezogenen Strichen die ausgefahrene Betriebsstellung, wobei die eingefahrene Ruhestellung und mehrere Zwischenstellungen jeweils gestrichelt und abgebrochen dargestellt sind.

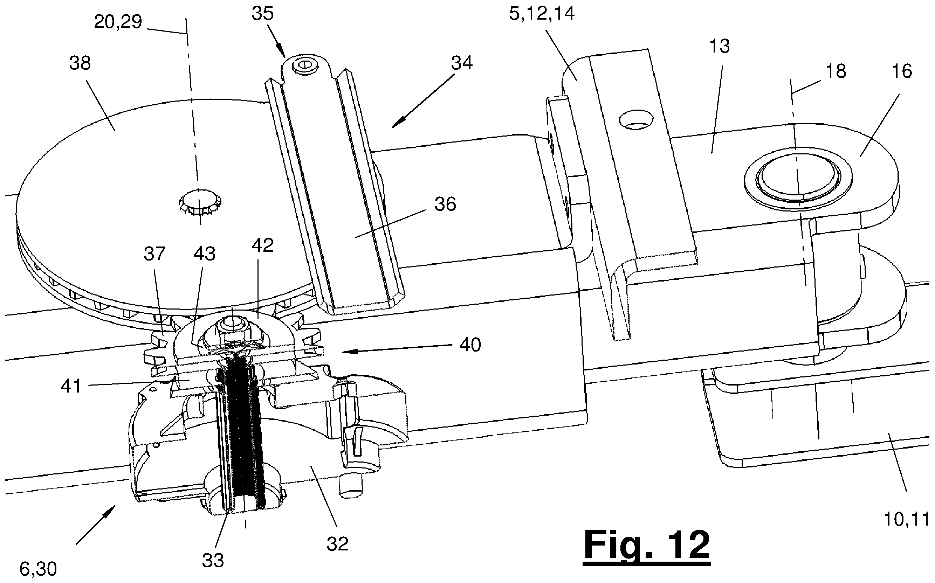

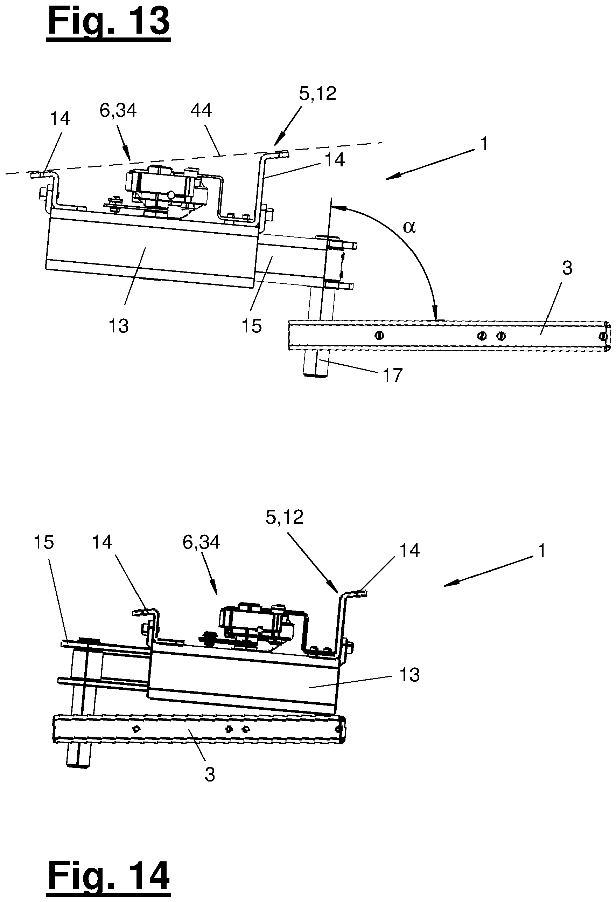

In Figur 12 ist eine Variante mit einer Rutschkupplung (40) dargestellt. Figur 13 und 14 verdeutlichen eine weitere Variante mit anderem Achswinkel. In Figur 15 und 16 sind Einbausituationen und Betriebsstellungen von Trittstufen (1) mit verschiedenen Achswinkeln gezeigt.

In beiden Varianten weist die ausfahrbare Trittstufe (1) ein bewegliches Trittelement (3) und eine mechanische Ausfahrvorrichtung (4) auf. Mittels der Ausfahrvorrichtung (4) kann das Trittelement (3) aus der zurückgezogenen Ruhestellung in die ausgefahrenen Betriebsstellung nach vorn in Pfeilrichtung von Figur 1 und zurück bewegt werden. Die Ausfahrvorrichtung (4) bewegt bzw. verschwenkt beim Ausfahren das Trittelement (3) in seiner Hauptebene. In der üblichen Einbau- und Fahrzeuglage wird das Trittelement (3) liegend bzw. horizontal verschwenkt.

Die Ausfahrtvorrichtung (4) weist ein Gestell (5), einen Aktor (6) und ein Lenkergetriebe (7) auf, welches als Parallelogramgetriebe mit mehreren, z.B. zwei, parallelen und bevorzugt gleichartigen Lenkern (5,16) ausgebildet ist. Der Aktor (6) treibt das Lenkergetriebe (7) bevorzugt drehend an und bewegt dadurch das Trittelement (3) zwischen der Ruhestellung und der Betriebsstellung hin und her.

Die Bewegungsbahn (8) des Trittelements (3) hat dabei die in Figur 6 gezeigte ovale Form. Das Trittelement (3) behält bei der Schwenkbewegung seine Ausrichtung nach vorn und seine Höhenlage bei. Wie Figur 6 bis 8 verdeutlichen, befindet sich das Trittelement (3) in der Betriebsstellung mittig und ggf. mit Abstand vor dem Gestell (5). In der zurückgezogenen Ruhestellung ist das Trittelement (3) mittig unter dem Gestell (5) angeordnet. Es kann dabei ein Stück nach hinten über das Gestell (5) hinausragen. In den Zwischenstellungen ist das Trittelement (3) mit seitlichem Versatz unter dem Gestell (5) angeordnet und ragt entsprechend der Lenkerlänge nach einer Seite ein Stück über das Gestell (5) hinaus.

Das Gestell (5) dient zur Befestigung der ausfahrbaren Trittstufe (1) am Straßenfahrzeug (2). Das Gestell (5) kann in beliebig geeigneter Weise ausgebildet sein. In den gezeigten Ausführungsbeispielen ist es als Tragrahmen (12) ausgebildet, der z.B. eine rechteckige Form aufweist. Der Tragrahmen (12) umfasst zwei oder mehr bevorzugt gerade Tragprofile (13), die parallel zueinander angeordnet und in der durch den Pfeil in Figur 1 verdeutlichten Ausfahrrichtung ausgerichtet sind. Die seitlich voneinander distanzierten Tragprofile (13) werden durch Querträger (14) miteinander verbunden.

Am Tragrahmen (12) ist das Parallelogrammgetriebe (7) angeordnet und gelagert. Außerdem kann der Aktor (6) am Gestell (5) bzw. am Tragrahmen (12) angeordnet und abgestützt sein. Der Aktor (6) weist einen Antrieb (30) und eine bevorzugt spielarme Synchronisiereinrichtung (34) auf, die mit dem Lenkergetriebe (7) und dessen Lenkern (15,16) treibend verbunden sind. Die Synchronisiereinrichtung (34) ist z.B. als Kurbeltrieb ausgebildet.

Die parallelen Lenker (15,16) weisen jeweils an beiden Lenkerenden aufrechte, insbesondere vertikale, Schwenkachsen (17,18,19,20) auf. Die Schwenkachse (17,18,19,20) sind parallel zueinander ausgerichtet. Die Längen der Lenker (15,16) und die axialen Abstände ihrer jeweiligen vorderen Schwenkachse (17,18) und hinteren Schwenkachse (19,20) sind gleich.

Über die vorderen Schwenkachsen (17,18) an den vorderen Lenkerenden sind die Lenker (15,16) mit dem Trittelement (3) schwenkbar verbunden. Sie sind dabei bevorzugt mit dem rückwärtigen Randbereich des Trittelements (3) schwenkbar verbunden. Die Schwenkachsen (17,18,19,20) können gemäß Figur 7 einen Achswinkel α von z.B. 90° mit der Hauptebene des Trittelements (3) einschließen.

Die Lenker (15,16) sind an den hinteren Schwenkachsen (19,20) mit dem Gestell (5), mit dem Tragrahmen (12) und dessen Rahmenprofilen (11) in deren mittleren Bereich schwenkbar verbunden. Die hinteren Schwenkachsen (19,20) sind als Treibachsen (28,29) ausgebildet. Der Aktor (6), insbesondere die Synchronisiereinrichtung (34), ist mit den hinteren Schwenkachsen (19,20) bzw. Treibachsen (28,29) verbunden und treibt hier die Lenker (15,16) drehend an.

Bei der Ausfahr- und Einfahrbewegung zwischen der Ruhestellung und der Betriebsstellung führen die bevorzugt geraden Lenker (15,16) die in Figur 6 gezeigte 180°-Drehung aus. Sie drehen dabei um die hinteren Schwenkachsen (19,20) bzw. Treibachsen (28,29) relativ zum Gestell (5). Durch die parallele Anordnung und gleichartige Ausbildung der Lenker (15,16) wird das Trittelement (3) bei der Schwenkbewegung unter Beibehaltung seiner Ausrichtung und Höhenlage mitgenommen.

Wie Figur 1 bis 5 verdeutlichen, sind die Lenker (15,16) als im Wesentlichen U-förmige Profile ausgebildet, die seitlich offen sind. Die parallelen Profilschenkel sind liegend und der verbindende Rückensteg ist stehend angeordnet. Die Profilöffnung kann nach der gleichen Seite oder nach verschiedenen Seiten weisen. Die Lenker (15,16) können auch eine rohrartige oder kastenartige Profilform haben. Diese kann eine umfangseitig zumindest weitgehend geschlossene Profilwandung aufweisen. Der Rohrquerschnitt kann prismatisch, insbesondere rechteckig oder quadratisch, oder gerundet ausgebildet sein. Die Stirnöffnungen können mit einem Stopfen oder dgl. verschlossen sein.

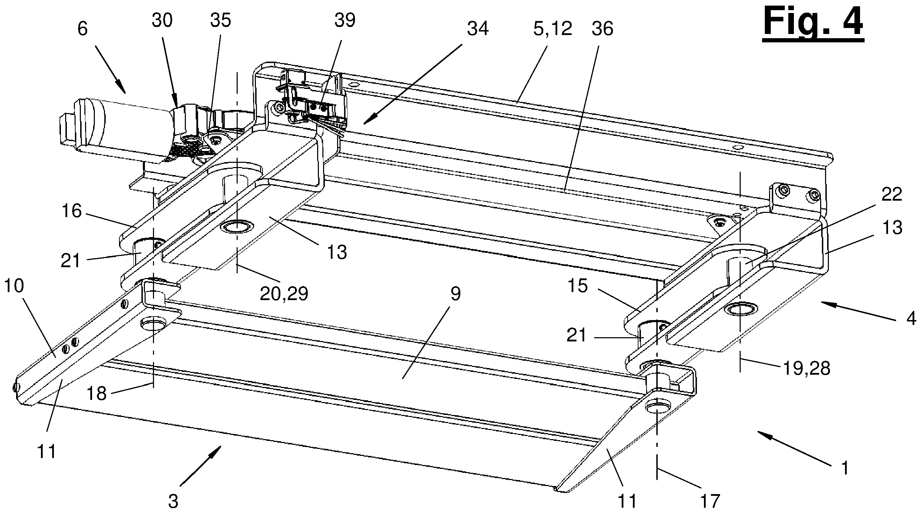

Die parallelen Tragprofile (13) sind als im Wesentlichen U-förmige und seitlich offene Profile ausgebildet. Die Profilöffnungen sind gleich gerichtet. Wie Figur 4 verdeutlicht, sind die Lenker (15,16) jeweils in einem Tragprofil (13) aufgenommen. Die Lenker (15,16) können über die seitlichen Profilöffnungen in das jeweilige Tragprofil (13) eintauchen.

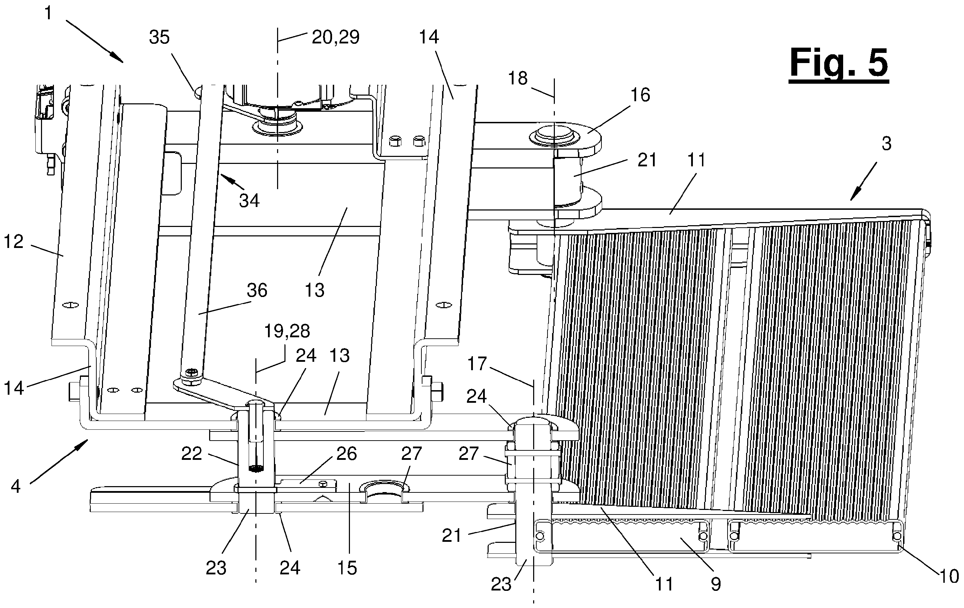

Gemäß Figur 6 sind die Lenker (15,16) in der Ruhestellung und in der Betriebsstellung in den Tragprofilen (13) in Parallellage versenkt aufgenommen und abgestützt. Die Abstützfunktion ist auch in Figur 5 dargestellt. In der Ruhe- und Betriebsstellung erstrecken sich die geraden Lenker (15,16) jeweils längs und parallel zu den zugehörigen und ebenfalls geraden Tragprofil (13). Die Lenker (15,16) können auf den unteren Schenkeln der Tragprofile (13) aufliegen.

Das Trittelement (3) ist in den gezeigten Ausführungsformen hängend an der Unterseite der Lenker (15,16) angeordnet. Das Trittelement (3) kann in beliebig geeigneter Weise ausgebildet sein. Es ist bevorzugt plattenförmig ausgestaltet.

In den gezeigten Ausführungsbeispielen weist es einen z.B. rechteckigen Rahmen (10) und eine dort aufgenommene einteilige oder mehrteilige und bevorzugt ebene Trittplatte (9) auf. Der Rahmen (10) umfasst seitliche Rahmenprofile (11), die parallel zueinander angeordnet und nach innen offen sind. Die Rahmenprofile (11) können ebenfalls eine im Wesentlichen u-förmige Profilform aufweisen. Die Trittplatte (9) kann an ihren Längsrändern im jeweiligen Rahmenprofil (11) aufgenommen sein.

Die vorderen Schwenkachsen (17,18) verlaufen zwischen dem jeweiligen Lenker (15,16) und einem darunter angeordneten Rahmenprofil (11). Die vorderen Schwenkachsen (17,18) erstrecken sich dabei durch die im Wesentlichen parallelen Profilschenkel der Lenker (15,16) und der Rahmenprofile (11) .

Die hinteren Schwenkachsen (19,20) erstrecken sich durch die liegenden und bevorzugt parallelen Profilschenkel der Lenker (15,16) und der Tragprofile (13).

Die aufrechten Schwenkachsen (17,18,19,20) werden jeweils von einem Lager (21,22) gebildet. Figur 5 verdeutlicht in einer teilweise geschnittenen Seitenansicht die Lagerausbildung.

Die vorderen Schwenkachsen (17,18) zwischen Lenkern (15,16) und dem Trittelement (3) weisen ein jeweils aufrechtes vorderes Lager (21) auf. Die hinteren Schwenkachsen (19,20) weisen jeweils ein aufrechtes hinteres Lager (22) auf.

Die Lager (21,22) sind jeweils als Bolzen- oder Zapfenlager ausgebildet. Sie weisen einen aufrechten und längs der jeweiligen Schwenkachse gerichteten Lagerbolzen (23) auf, der die besagten liegenden Profilschenkel der Profile (11,13,15,16) durchsetzt.

Bei den vorderen Lagern (21) ist der Lagerbolzen (23) mittels Lagerhülsen (24) um die jeweilige Schwenkachse (17,18) drehbar am zugehörigen Lenker (15,16) gelagert. Auf den Lagerbolzen (23) ist umfangseitig jeweils ein hülsenförmiges Stützelement (25) befestigt. Es ist zwischen den liegenden Schenkeln des jeweiligen Lenkers (15,16) angeordnet und stützt sich hieran in der aufrechten Achs- und Bolzenrichtung ab. Hierdurch kann z.B. der Lagerbolzen (23) und das daran hängend angeordnete Trittelement (3) am jeweiligen Lenker (15,16) in der aufrechten bzw. vertikalen Richtung abgestützt werden.

Bei den vorderen Lagern (21) durchsetzt der nach unten vorstehende Lagerbolzen (23) jeweils die liegenden Schenkel des zugehörigen Rahmenprofils (11). Das Trittelement (3) ist an den Lagerbolzen (23) axial abgestützt und z.B. drehschlüssig befestigt. Die Befestigung kann z.B. über die Rahmenprofile (11) und(oder die Trittplatte (9) erfolgen. Diese greift z.B. formschlüssig in eine Ausnehmung am Bolzenmantel ein. Bei den vorderen Lagern (21) drehen sich die Lagerbolzen (23) mit dem Trittelement (3) relativ zu den Lenkern (15,16).

Die hinteren Lager (22) an den hinteren Schwenkachsen (19,20) bzw. dem hinteren Treibachsen (28,29) weisen gemäß Figur (5) ebenfalls einen aufrechten Lagerbolzen (23) auf. Dieser ist mittels Lagerhülsen (24) schwenkbar um die jeweilige aufrechte Schwenk- und Treibachse (19,20,28,29) am jeweiligen Tragprofil (13), insbesondere an dessen liegenden Schenkeln, gelagert. Der Lagerbolzen (23) durchsetzt auch die liegenden Schenkel des jeweiligen Lenkers (15,16) und ist mit dem Lenker (15,16) drehfest verbunden. Hierfür ist z.B. ein Mitnehmer (26) am Lenker (15,16) befestigt, der formschlüssig in oder an dem Lagerbolzen (23) angreift.

Der Lagerbolzen (23) ragt an einem Ende über das Tragprofil (13) hinaus und ist hier mit der Synchronisiereinrichtung (34) drehfest verbunden. Eine Bewegung des Aktors (6) dreht die Lagerbolzen (23) und die Lenker (15,16) um die jeweilige aufrechte Schwenk- oder Treibachse (19,20,28,29). Die besagten aufrechten Schwenk- bzw. Treibachsen (19,20,28,29) sind jeweils im mittleren Bereich der Längsrichtung der Tragprofile (13) angeordnet.

Wie Figur 4 und 5 verdeutlichen, sind die Lenker (15,16) versenkt im jeweils zugehörigen Tragprofil (13) aufgenommen und sind z.B. zwischen dessen liegende Profilschenkel eingepasst. Die Lenker (15,16) können sich an den Tragprofilen (13) in der aufrechten, insbesondere vertikalen, Richtung abstützen. Sie können hierüber in der Betriebsstellung das Eigengewicht des Trittelements (3) und die Trittlast einer Person abstützen. Die Lenker (15,16) können eine oder mehrere Stützhülsen (27) oder dgl. aufweisen, die als stützende Gleitlager in der versenkten Aufnahmestellung am jeweiligen Tragprofil (13) dienen können.

Wie Figur 5 bis 8 verdeutlichen, sind die Lenker (15,16) in ihrer Länge und in der Anordnung der hinteren Schwenkachsen (19,20) derart an die Rahmenprofile (13) angepasst, dass sie in der ausgefahrenen Betriebsstellung nach vorn über die Tragprofile (13) und den Tragrahmen (12) hinausragen. In der zurückgezogenen Ruhestellung sind sie um 180° gedreht und können mit ihren vorderen Lenkerenden und den vorderen Schwenkachsen (17,18) nach hinten über die Tragprofile (13) hinausragen. Figur 2 und 3 verdeutlichen diese Lenkerpositionen in der Ruhe- und Betriebsstellung an den transparent dargestellten Tragprofilen (13). Die Stützhülse (27) oder ein anderes geeignetes Stütz- und Gleitmittel wirkt gemäß Figur 3 auch in der Ruhestellung und in Anlage am jeweiligen Tragprofil (13) .

Beim ersten Ausführungsbeispiel von Figur 1 bis 9 ist der Antrieb (30) des Aktors (6) über ein Stützprofil an der Oberseite des Tragrahmens (12) befestigt und ist über dem einen Tragprofil (13) angeordnet. Er wirkt direkt auf die dortige Schwenk- und Treibachse (20,29) und treibt die andere Schwenk- und Treibachse (19,28) über die Synchronisiereinrichtung (34), insbesondere den Kurbeltrieb, an.

Wie Figur 7 und 8 verdeutlichen, hat der Antrieb (30) eine flache Bauform und kann im Tragrahmen (12) aufgenommen werden. Die Tragrahmenbefestigung erfolgt über die hochragenden Querträger (14) z.B. an der Unterseite der Fahrzeugkarosserie. Die Querträger (14) haben eine gleiche Höhe, wodurch sie mit ihren abgewinkelten Montageflanschen eine Montageebene (44) bilden, die parallel zur Hauptebene des Trittelements (3) und des Parallelogrammgetriebes (7) gerichtet ist. Die Montageebene (44) kann parallel zum Untergrund bzw. horizontal gerichtet sein.

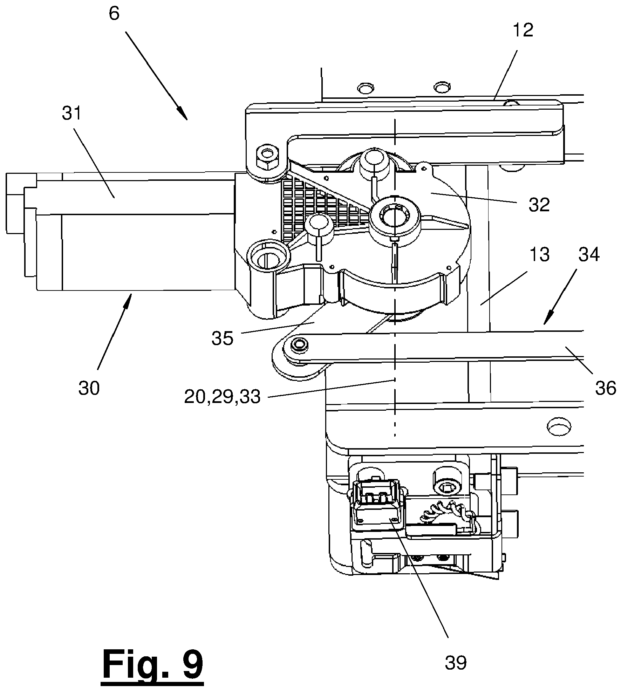

Figur 9 verdeutlicht die Ausbildung und Anordnung des Antriebs (30). Dieser weist z.B. einen bevorzugt elektrischen Motor (31) und ggf. ein untersetzendes Vorschaltgetriebe (32) auf. Der Antrieb (30) treibt die eine hintere Schwenkachse (20) bzw. Treibachse (29) direkt drehend an. Die Abtriebswelle (33) des Antriebs (30), insbesondere des Vorschaltgetriebes (32), ist mit dem Lagerbolzen (23) des betreffenden hinteren Lagers (22) drehfest verbunden und treibt diesen direkt und drehend an.

Die z.B. als Kurbeltrieb ausgebildete Synchronisiereinrichtung (34) weist eine Kurbel (35) und eine gelenkig angebundene Treibstange (36) sowie eine weitere Kurbel zur Verbindung mit der anderen Schwenk- und Treibachse (19,28) auf. Die Kurbel (35) ist z.B. mit der Abtriebswelle (33) des Antriebs (30) drehschlüssig verbunden. Zwischen der anderen Kurbel und der anderen Schwenk- und Treibachse (19,28) und dem dortigen Lagerbolzen (23) besteht ebenfalls eine drehschlüssige Verbindung. Figur 5 zeigt diese Anordnung. Der Kurbeltrieb kann ebenfalls als Parallelogrammgetriebe mit parallelen und gleichartigen Kurbeln und der gelenkig verbindenden Treibstange (36) ausgebildet sein.

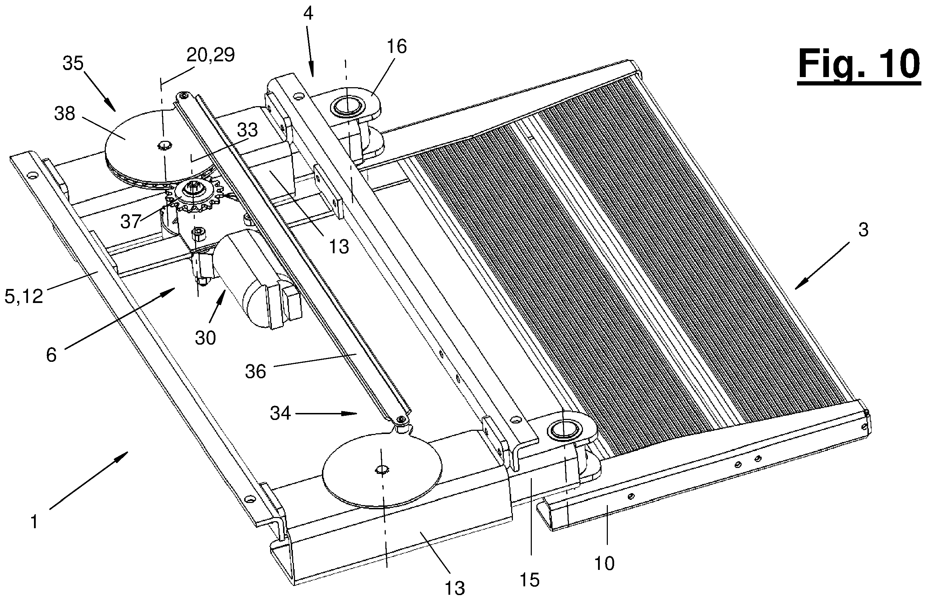

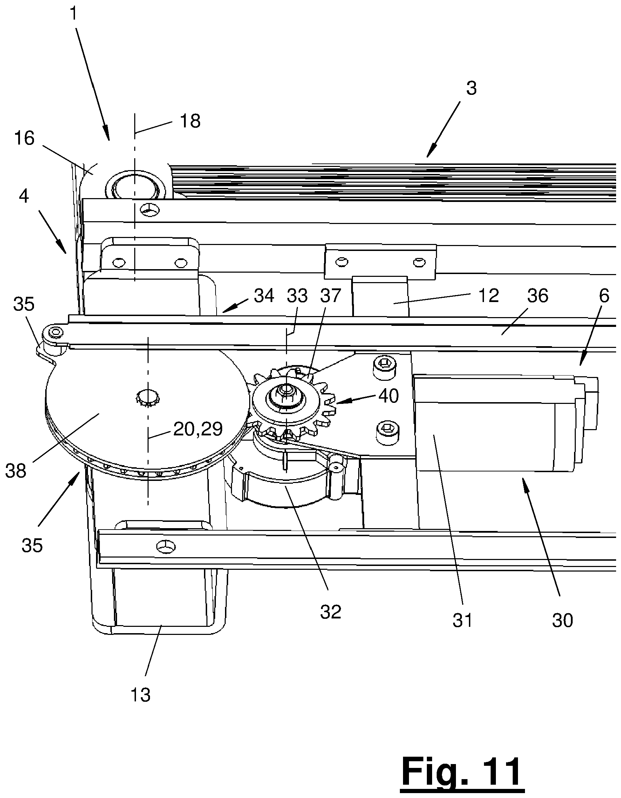

Figur 10 und 11 verdeutlichen die zweite Variante der ausfahrbaren Trittstufe (1). Diese unterscheidet sich von der ersten Variante durch die Ausbildung des Aktors (6).

Dieser weist ebenfalls einen Antrieb (30) und eine z.B. als Kurbeltrieb ausgebildete Synchronisiereinrichtung (34) auf. Der Antrieb (30) umfasst einen Elektromotor und ein Vorschaltgetriebe (32). Das Vorschaltgetriebe (32) kann ggf. entfallen. Der Antrieb (30) ist hierbei innerhalb des Tragrahmens (12) an einer Längsstrebe befestigt. Die Abtriebswelle (33) ist von beiden Tragprofilen (13) distanziert. Der Antrieb (30) treibt die Kurbel (35) des Kurbeltriebs an.

Im Unterschied zur ersten Variante wird die Kurbel (35) von einem auf der Abtriebswelle (33) angeordneten Ritzel (37) und einem damit kämmenden und im Durchmesser größeren Treibrad (38) gebildet. Hierbei kann z.B. eine Triebstockverzahnung zum Einsatz kommen. Das Treibrad (38) ist auf der einen hinteren Schwenk- und Treibachse (20,29) drehend angeordnet und ist mit dem zugehörigen Lagerbolzen (23) drehfest verbunden. Die Treibstange (36) ist mit dem Treibrad (38) an dessen Außenumfang gelenkig verbunden. Die Kurbel am anderen Tragprofil (13) ist ebenfalls als scheibenförmiges Rad mit einer gelenkigen Treibstangenanbindung am äußeren Radumfang ausgebildet. Sie ist mit der anderen Schwenk- und Treibachse (19,28) und dem dortigen Lagerbolzen (23) drehfest verbunden.

Diese Anordnung des Antriebs (30) im Innenraum des Tragrahmens (12) ermöglicht eine gesteigerte Baugröße des Antriebs (30). Außerdem kann die Übersetzung der von Ritzel (37) und Treibrad (38) gebildeten Kurbel (35) größer als in der ersten Variante sein.

Die Ausfahrvorrichtung (4) kann eine in Figur 2 bis 4 und 9 gezeigte Sensorik (39) aufweisen. Diese kann z.B. die Bewegung von einem oder beiden Lenkern (15,16) detektierten. Dies kann in beliebig geeigneter Weise erfolgen, z.B. über die Erfassung einer Endposition des betreffenden Lenkers (15,16). Die Sensorik (39) kann z.B. am hinteren Ende des einen Tragprofils (13) angeordnet sein. Sie einen Endschalter aufweisen, der von dem Lenker (16) in der um 180° geschwenkten Ruhestellung betätigt wird.

Figur 12 verdeutlicht die Möglichkeit einer indirekten Übertragung der Antriebskräfte vom Aktor (6) bzw. dessen Antrieb (30) auf eine Treibachse (29) mittels einer zwischengeschalteten Rutschkupplung (40). Die Rutschkupplung (40) ist dabei in einer Einbausituation an einem Antrieb (30) gemäß Figur 10 und 11 dargestellt. Die Rutschkupplung (40) lässt sich mit entsprechender Anpassung auch an dem Aktor (6) sowie Antrieb (30) der ersten Variante von Figur 1 bis 9 anbauen.

Die Rutschkupplung (40) weist z.B. eine Reibscheibe (41) auf, die mit der Antriebswelle (33) drehfest und ggf. formschlüssig verbunden ist. Die Reibscheibe (41) überträgt mittels Reibschluss die Drehbewegungen und das Antriebsmoment auf das Ritzel (37). Das Ritzel (37) ist frei drehbar auf der Abtriebswelle (33) gelagert.

Der Reibschluss wird durch eine Klemmscheibe (42) und eine Feder (43) hergestellt. Das Ritzel (37) ist zwischen der Klemmscheibe (42) und der Reibscheibe (41) angeordnet und mit einstellbarer Kraft sowie Reibschluss eingespannt. Die Reibscheibe ist durch eine Schraube mit der Abtriebswelle (33) verbunden, wobei die z.B. als Tellerfeder ausgebildete Feder (43) zwischen dem Schraubkopf bzw. der Mutter und der Klemmscheibe (42) eingespannt ist und die Klemmscheibe (42) gegen das Ritzel (37) und die Reibscheibe (41) drückt.

Die Rutschkupplung (40) ermöglicht ein Durchrutschen des Antriebs (30) bei einem übergroßen Widerstand gegen die Antriebsbewegung. Alternativ kann die Rutschkupplung (40) in anderer Weise ausgebildet sein. Sie kann z.B. zwischen den Hälften einer geteilten Abtriebswelle (33) angeordnet werden. Sie kann ansonsten in anderer Weise ausgebildet und angeordnet sein. Sie kann auch entfallen.

Figur 13 und 14 verdeutlichen die ausfahrbare Trittstufe (1) in einer Ausführungsform mit einem anderen Achswinkel (α) und in eingefahrener sowie ausgefahrener Betriebsstellung. Der Achswinkel (α) zwischen den Schwenkachsen (17,18) und der Hauptebene des Trittelements (3) kann z.B. kleiner als 90° sein. Er kann z.B. ca. 85° betragen. Alternativ kann der Achswinkel (α) einen anderen Wert annehmen. Er kann auch größer als 90° sein.

Figur 13 und 14 zeigen außerdem eine andere Ausbildung des Gestells (5), welches für einen Schrägeinbau der Trittstufe (1) an einem Straßenfahrzeug (2) vorgesehen ist. Die Querträger (14) haben hierbei die gezeigten unterschiedlichen Höhen, so dass ihre abgewinkelten Flansche eine Montageebene (44) bilden, die schräg zu der Hauptebene der Tragprofile (13) und der Lenker (15,16) ausgerichtet ist. Die Schräglage der Montageebene des Gestells (5) kann auf den von 90° abweichenden Achswinkel(α) abgestimmt sein, so dass in der Einbaulage die Hauptebene des Trittelements (3) parallel zum Untergrund bzw. horizontal ausgerichtet ist. Die Montageebene (44) kann je nach Einbausituation parallel oder schräg zum Untergrund ausgerichtet sein.

Figur 15 und 16 zeigen diese Einbausituationen. In Figur 15 ist die Einbausituation mit der in Figur 1 bis 9 gezeigten ersten Variante der Trittstufe (1) dargestellt, bei der die Hauptebenen des Trittelements (3), des Parallelogrammgetriebes (7) und die Montageebene (44) des Gestells (5), insbesondere des Tragrahmens (12) parallel ausgerichtet sind. In Einbaulage am Straßenfahrzeug (2) besteht eine Parallelausrichtung zum Untergrund bzw. eine horizontale Ausrichtung des Trittelements (3). In Figur 15 sind die ausgefahrene und die eingefahrene Betriebsstellung des Trittelements (3) dargestellt.

Figur 16 verdeutlicht die vorgenannte schräge Einbaulage der Trittstufe (1) mit dem schräg im Straßenfahrzeug (2) montierten Gestell (5) bzw. Tragrahmen (12). Die Trittstufe (3) hat die erwähnte Parallelausrichtung zum Untergrund bzw. horizontale Ausrichtung. Figur 16 zeigt ebenfalls beide Betriebsstellungen des Trittelements (3). Bei der schrägen Einbausituation ist das Trittelement (3) in der ausgefahrenen Betriebsstellung tiefer als in der eingefahrenen Betriebsstellung angeordnet. Dies kann einerseits zu einer ergonomisch günstigen tieferen Einstiegsposition oder zu mehr Bodenfreiheit des Straßenfahrzeugs (2) in der eingefahrenen Betriebsstellung genutzt werden. Die schräge Einbaulage kann auch hinsichtlich der Störkonturen in der eingefahrenen Betriebsstellung am Straßenfahrzeug (2) vorteilhaft sein.

Abweichend von Figur 13, 14 und 16 sind auch andere schräge Einbaulagen und andere Achswinkel α möglich. Eine schräge Einbaulage kann z.B. entgegen gerichtet sein.

Die Trittstufe (1), insbesondere die Ausfahrvorrichtung (4), kann eine Steuerung und eine Energieversorgung sowie eine Betätigungseinrichtung und ggf. weitere Komponenten aufweisen, die der Übersicht halber nicht dargestellt sind. Die Betätigungseinrichtung kann z.B. eine leitungsgebundene oder drahtlose Fernbedienung sein. Für die Energieversorgung kann auf eine Bordversorgung der Straßenfahrzeugs (2), z.B. auf eine Batterie oder einen Akku, zurückgegriffen werden. Die Sensorik (39) ist ebenfalls mit der Steuerung verbunden.

Abwandlungen der gezeigten und beschriebenen Ausführungsbeispiele sind in verschiedener Weise möglich.

Statt der gezeigten hängenden Anordnung des Trittelements (3) an der Unterseite der Lenker (15,16) ist eine umgedrehte Anordnung möglich. Das Trittelement (3) kann stehend auf den Lenkern (15,16) angeordnet sein, wobei der Aktor (6) und die Querträger (14) an der Unterseite der Tragprofile (13) angeordnet sind. Bei der ersten Variante befanden sie sich an der Oberseite der Tragprofile (13). Bei einer solchen umgedrehten Anordnung können die Querträger (14) über die Tragprofile (13) seitlich hinausragen und derart weit nach oben vorstehen, dass Platz für das oben liegende Trittelement (3) in der Rückzugstellung besteht.

Eine andere Abwandlung betrifft die Antriebstechnik. Statt des drehend antreibenden Motors (31) kann ein lineares Antriebselement vorhanden sein, z.B. ein Zylinder, dessen lineare Antriebsbewegung über eine Kurbel, Zahnstange oder dgl. in eine drehende Antriebsbewegung für die Lenker (15,16) umgesetzt wird. In weiterer Abwandlung kann ein manueller Antrieb (30) vorgesehen sein, der z.B. mit einer Zapfwelle und einem Anschlussstück für eine Handkurbel oder dgl. ausgebildet ist.

Die Synchronisiereinrichtung (34) kann alternativ in anderer Weise, z.B. als Synchronriementrieb, ausgebildet sein, wobei z.B. auf den Treibachsen (28,29) gleichartige Zahnräder angeordnet und durch einen Synchronzahnriemen drehschlüssig verbunden sind.

### BEZUGSZEICHENLISTE

- 1: Trittstufe
- 2: Straßenfahrzeug
- 3: Trittelement
- 4: Ausfahrvorrichtung, Ausfahrmechanik
- 5: Gestell, Gehäuse
- 6: Aktor
- 7: Lenkergetriebe
- 8: Bewegungsbahn
- 9: Trittplatte
- 10: Rahmen
- 11: Profil, Rahmenprofil
- 12: Tragrahmen
- 13: Profil, Tragprofil
- 14: Querträger
- 15: Lenker
- 16: Lenker
- 17: Schwenkachse vorn
- 18: Schwenkachse vorn
- 19: Schwenkachse hinten
- 20: Schwenkachse hinten
- 21: Lager Trittelement
- 22: Lager Lenker
- 23: Lagerbolzen
- 24: Lagerhülse
- 25: Stützelement
- 26: Mitnehmer
- 27: Stützhülse
- 28: Treibachse
- 29: Treibachse
- 30: Antrieb
- 31: Motor
- 32: Vorschaltgetriebe
- 33: Abtriebswelle
- 34: Synchronisiereinrichtung, Kurbeltrieb
- 35: Kurbel
- 36: Treibstange
- 37: Ritzel
- 38: Treibrad
- 39: Sensorik
- 40: Rutschkupplung
- 41: Reibscheibe
- 42: Klemmscheibe
- 43: Feder
- 44: Montageebene

- α: Achswinkel

## Patentansprüche

1. Ausfahrbare Trittstufe mit einem beweglichen Trittelement (3) und einer Ausfahrvorrichtung (4), mittels der das Trittelement (3) zwischen einer eingefahrenen Ruhestellung und einer ausgefahrenen Betriebsstellung bewegbar ist, wobei die Ausfahrvorrichtung (4) ein Gestell (5), einen Aktor (6) und ein Lenkergetriebe (7) aufweist, wobei das Lenkergetriebe (7) als Parallelogrammgetriebe mit mehreren, insbesondere zwei, parallelen Lenkern (15,16) und mit aufrechten Schwenkachsen (17-20) an jeweils beiden Lenkerenden ausgebildet ist und das Trittelement (3) in seiner Hauptebene in einer ovalen Bewegungsbahn (8) verschwenkt, **dadurch gekennzeichnet, dass** das Gestell (5) einen Tragrahmen (12) mit parallelen Tragprofilen (13) aufweist, an denen hintere Schwenkachsen (19,20) der Lenker (15,16) angeordnet sind, wobei die Tragprofile (13) als seitlich offene, gleichgerichtete Profile ausgebildet sind, in denen die Lenker (15,16) aufgenommen sind, wobei die Lenker (15,16) in der Ruhestellung und der Betriebsstellung in den Tragprofilen (13) in Parallellage versenkt aufgenommen und abgestützt sind.

2. Ausfahrbare Trittstufe nach Anspruch 1, **dadurch gekennzeichnet, dass** das Lenkergetriebe (7) derart ausgebildet ist, dass die Lenker (15,16) eine 180°-Drehung bei der Bewegung zwischen Ruhestellung und Betriebsstellung ausführen.

3. Ausfahrbare Trittstufe nach Anspruch 1 oder 2, **dadurch gekennzeichnet, dass** die Lenker (15,16) an vorderen Schwenkachsen (17,18) mit dem rückwärtigen Randbereich des Trittelements (3) schwenkbar verbunden sind.

4. Ausfahrbare Trittstufe nach einem der vorhergehenden Ansprüche, **dadurch gekennzeichnet, dass** die Lenker (15,16) an den hinteren Schwenkachsen (19,20) mit dem Gestell (5) in dessen mittlerem Bereich schwenkbar verbunden sind.

5. Ausfahrbare Trittstufe nach einem der vorhergehenden Ansprüche, **dadurch gekennzeichnet, dass** die Lenker (15,16) als seitlich offene, im wesentlichen U-förmige Profile oder als rohrförmige Profile ausgebildet sind.

6. Ausfahrbare Trittstufe nach einem der vorhergehenden Ansprüche, **dadurch gekennzeichnet, dass** das Trittelement (3) hängend an der Unterseite der Lenker (15,16) angeordnet ist, wobei die Schwenkachsen (17,18) zur Verbindung des vorderen Lenkerendes mit dem Trittelement (3) am hinteren Randbereich des Trittelements (3) angeordnet sind.

7. Ausfahrbare Trittstufe nach einem der vorhergehenden Ansprüche, **dadurch gekennzeichnet, dass** die Lenker (15,16) und die Tragprofilen (13) derart aufeinander abgestimmt sind, dass die Lenker (15,16), insbesondere mit ihren vorderen Schwenkachsen (17,18), in der Ruhestellung und der Betriebsstellung stirnseitig aus den Tragprofilen (13) ragen.

8. Ausfahrbare Trittstufe nach einem der vorhergehenden Ansprüche, **dadurch gekennzeichnet, dass** die aufrechten Schwenkachsen (17-20) der Lenker (15,16) können von vorderen und hinteren Lagern (21,22) gebildet werden, wobei die vorderen und hinteren Lager (21,22) jeweils einen die Profile der Lenker (15,16) und ggf. der Tragprofile (13) durchsetzenden aufrechten Lagerbolzen (23) und Lagerhülsen (24) an den Schenkeln der besagten Profile aufweisen, wobei die vorderen Lager (21) für das Trittelement (3) jeweils eine im Lenker (15,16) angeordnete Stützhülse (27) aufweisen.

9. Ausfahrbare Trittstufe nach einem der vorhergehenden Ansprüche, **dadurch gekennzeichnet, dass** der Aktor (6) am Gestell (5) angeordnet und abgestützt ist.

10. Ausfahrbare Trittstufe nach einem der vorhergehenden Ansprüche, **dadurch gekennzeichnet, dass** der Aktor (6) einen Antrieb (30) und eine Synchronisiereinrichtung (34) aufweist, wobei die Synchronisiereinrichtung (34) mit den hinteren Schwenkachsen (19,20) verbunden ist, die als Treibachsen (28,29) ausgebildet sind.

11. Ausfahrbare Trittstufe nach Anspruch 10, **dadurch gekennzeichnet, dass** die Synchronisiereinrichtung (34) als Kurbeltrieb (34) ausgebildet ist, der eine Treibstange (36) und eine mit einer Abtriebswelle (33) des Antriebs (30) verbundene Kurbel (35) aufweist, wobei die Abtriebswelle (33) mit einer Treibachse (28,29) direkt treibend, insbesondere drehfest, oder mittels einer zwischengeschalteten Rutschkupplung (40) verbunden ist.

12. Ausfahrbare Trittstufe nach einem der Ansprüche 10 oder 11, **dadurch gekennzeichnet, dass** der Antrieb (30) einen Motor (31), insbesondere einen Elektromotor, und ggf. ein Vorschaltgetriebe ((32) aufweist.

13. Ausfahrbare Trittstufe nach einem der vorhergehenden Ansprüche, **dadurch gekennzeichnet, dass** die Ausfahrvorrichtung (4) eine die Bewegungen des Trittelements (3) erfassende Sensorik (39) aufweist.

14. Ausfahrbare Trittstufe nach einem der vorhergehenden Ansprüche, **dadurch gekennzeichnet, dass** die Ausfahrvorrichtung (4), insbesondere das Gestell (5), für eine hängende Anordnung an der Unterseite einer Fahrzeugkarosserie eines Straßenfahrzeugs (2) ausgebildet ist.

15. Straßenfahrzeug, insbesondere motorisiertes Wohnmobil oder Wohnwagenanhänger, mit einer Fahrzeugkarosserie und einer ausfahrbaren Trittstufe (1), **dadurch gekennzeichnet, dass** die ausfahrbaren Trittstufe (1) nach einem der Ansprüche 1 bis 14 ausgebildet ist.

## Claims

1. Extendable step having a moveable tread element (3) and an extending apparatus (4), by means of which the tread element (3) can be moved between a retracted, rest position and an extended, operating position, wherein the extending apparatus (4) has a framework (5), an actuator (6) and a linkage mechanism (7), wherein the linkage mechanism (7) is designed in the form of a four-bar linkage with a plurality of, in particular two, parallel links (15, 16) and with upright pivot-axis members (17-20) at in each case both link ends, and the tread element (3) pivots, in its main plane, in an oval movement path (8), **characterized in that** the framework (5) has a carrying frame (12) of parallel carrying profiles (13), on which rear pivot-axis members (19, 20) of the links (15, 16) are arranged, wherein the carrying profiles (13) are designed in the form of laterally open profiles which are oriented in the same direction and in which the links (15, 16) are accommodated, wherein, in the rest position and the operating position, the links (15, 16) are accommodated, and supported, in a recessed state in the carrying profiles (13), in a parallel position.

2. Extendable step according to Claim 1, **characterized in that** the linkage mechanism (7) is designed such that the links (15, 16) execute a 180° rotation during movement between the rest position and operating position.

3. Extendable step according to Claim 1 or 2, **characterized in that** the links (15, 16), at front pivot-axis members (17, 18), are connected pivotably to the rear edge region of the tread element (3).

4. Extendable step according to one of the preceding claims, **characterized in that** the links (15, 16), at the rear pivot-axis members (19, 20), are connected pivotably to the framework (5), in the central region thereof.

5. Extendable step according to one of the preceding claims, **characterized in that** the links (15, 16) are designed in the form of laterally open, essentially U-shaped profiles or in the form of tubular profiles.

6. Extendable step according to one of the preceding claims, **characterized in that** the tread element (3) is arranged so as to hang on the underside of the links (15, 16), wherein the pivot-axis members (17, 18) are arranged so as to connect the front link end to the tread element (3) at the rear edge region of the tread element (3).

7. Extendable step according to one of the preceding claims, **characterized in that** the links (15, 16) and the carrying profiles (13) are coordinated with one another such that, in the rest position and the operating position, the links (15, 16), in particular by way of their front pivot-axis members (17, 18), have their end sides projecting out of the carrying profiles (13).

8. Extendable step according to one of the preceding claims, **characterized in that** the upright pivot-axis members (17-20) of the links (15, 16) can be formed by front and rear bearings (21, 22), wherein the front and rear bearings (21, 22) each have an upright bearing pin (23), which passes through the profiles of the links (15, 16) and possibly of the carrying profiles (13), and bearing sleeves (24) on the limbs of the said profiles, wherein the front bearings (21) for the tread element (3) each have a supporting sleeve (27), which is arranged in the link (15, 16).

9. Extendable step according to one of the preceding claims, **characterized in that** the actuator (6) is arranged, and supported, on the framework (5).

10. Extendable step according to one of the preceding claims, **characterized in that** the actuator (6) has a drive (30) and a synchronizing device (34), wherein the synchronizing device (34) is connected to the rear pivot-axis members (19, 20), which are designed in the form of drive-axis members (28, 29).

11. Extendable step according to Claim 10, **characterized in that** the synchronizing device (34) is designed in the form of a crank drive (34), which has a drive rod (36) and a crank (35), which is connected to an output shaft (33) of the drive (30), wherein the output shaft (33) is connected to a drive-axis member (28, 29) for direct driving action, in particular for conjoint rotation, or by means of an interposed slip clutch (40).

12. Extendable step according to either of Claims 10 and 11, **characterized in that** the drive (30) has a motor (31), in particular an electric motor, and possibly a primary-gear mechanism (32).

13. Extendable step according to one of the preceding claims, **characterized in that** the extending apparatus (4) has a sensor system (39), which senses the movements of the tread element (3).

14. Extendable step according to one of the preceding claims, **characterized in that** the extending apparatus (4), in particular the framework (5), is designed to be hung on the underside of a vehicle body of a road vehicle (2).

15. Road vehicle, in particular motorhome or caravan, having a vehicle body and an extendable step (1), **characterized in that** the extendable step (1) is designed according to one of Claims 1 to 14.

## Revendications

1. Marchepied extractible, comprenant un élément formant marche (3) mobile et un dispositif d'extraction (4) au moyen duquel l'élément formant marche (3) peut être déplacé entre une position de repos rentrée et une position de service sortie, le dispositif d'extraction (4) présentant un châssis (5), un actionneur (6) et un mécanisme à barre directrice (7), dans lequel le mécanisme à barre directrice (7) est réalisé sous forme de mécanisme parallélogramme pourvu de plusieurs, en particulier de deux, barres directrices parallèles (15, 16) et d'axes de pivotement droits (17 à 20) respectivement aux deux extrémités de barre directrice, et l'élément formant marche (3) pivote dans son plan principal sur une trajectoire ovale (8),
**caractérisé en ce que** le châssis (5) présente un cadre porteur (12) à profilés de support parallèles (13) sur lesquels sont disposés des axes de pivotement arrière (19, 20) des barres directrices (15, 16), dans lequel les profilés de support (13) sont réalisés sous forme de profilés parallèles, latéralement ouverts, dans lesquels sont reçues les barres directrices (15, 16), dans lequel les barres directrices (15, 16) sont reçues de manière encastrée et soutenues dans les profilés de support (13) dans la position de repos et la position de service.

2. Marchepied extractible selon la revendication 1, **caractérisée en ce que** le mécanisme à barre directrice (7) est réalisé de telle sorte que les barres directrices (15, 16) effectuent une rotation sur 180° lors du mouvement entre la position de repos et la position de service.

3. Marchepied extractible selon la revendication 1 ou 2, **caractérisé en ce que** les barres directrices (15, 16) sont reliées en pivotement à la zone marginale arrière de l'élément formant marche (3), au niveau d'axes de pivotement avant (17, 18).

4. Marchepied extractible selon l'une quelconque des revendications précédentes, **caractérisé en ce que** les barres directrices (15, 16) sont reliées en pivotement au châssis (5) dans la zone centrale de celui-ci, au niveau des axes de pivotement arrière (19, 20).

5. Marchepied extractible selon l'une quelconque des revendications précédentes, **caractérisé en ce que** les barres directrices (15, 16) sont réalisées sous forme de profilés substantiellement en forme de U, latéralement ouverts, ou sous forme de profilés tubulaires.

6. Marchepied extractible selon l'une quelconque des revendications précédentes, **caractérisé en ce que** l'élément formant marche (3) est monté suspendu à la face inférieure des barre directrices (15, 16), les axes de pivotement (17, 18) étant disposés au niveau de la zone marginale arrière de l'élément formant marche (3) afin de relier l'extrémité de barre directrice avant à l'élément formant marche (3).

7. Marchepied extractible selon l'une quelconque des revendications précédentes, **caractérisé en ce que** les barres directrices (15, 16) et les profilés de support (13) sont adaptés les uns aux autres de telle sorte que les barres directrices (15, 16), dépassent, en particulier avec leurs axes de pivotement avant (17, 18), des profilés de support (13) sur la face frontale, dans la position de repos et la position de service.

8. Marchepied extractible selon l'une quelconque des revendications précédentes, **caractérisé en ce que** les axes de pivotement droits (17 à 20) des barres directrices (15, 16) peuvent être formés par des paliers avant et arrière (21, 22), dans lequel les paliers avant et arrière (21, 22) présentent respectivement un tourillon de palier (23) droit et des douilles de palier (24) traversant les profilés des barres directrices (15, 16) et le cas échéant les profilés de support (13) sur les branches desdits profilés, les paliers avant (21) présentant pour l'élément formant marche (3) respectivement une douille d'appui (27) disposée dans la barre directrice (15, 16) .

9. Marchepied extractible selon l'une quelconque des revendications précédentes, **caractérisé en ce que** l'actionneur (6) est disposé et soutenu au niveau du châssis (5).

10. Marchepied extractible selon l'une quelconque des revendications précédentes, **caractérisé en ce que** l'actionneur (6) présente un dispositif d'entraînement (30) et un dispositif de synchronisation (34), le dispositif de synchronisation (34) étant relié aux axes de pivotement arrière (19, 20) qui sont réalisés sous la forme d'axes d'entraînement (28, 29).

11. Marchepied extractible selon la revendication 10, **caractérisé en ce que** le dispositif de synchronisation (34) est réalisé sous forme de commande à manivelle (34) qui présente une bielle (36) et une manivelle (35) reliée à un arbre de sortie (33) du dispositif d'entraînement (30), l'arbre de sortie (33) étant relié à un axe d'entraînement (28, 29) directement en entraînement, en particulier de manière solidaire en rotation, ou au moyen d'un accouplement à glissement (40) interposé.

12. Marchepied extractible selon l'une quelconque des revendications 10 ou 11, **caractérisé en ce que** le dispositif d'entraînement (30) présente un moteur (31), en particulier un moteur électrique, et le cas échéant une transmission primaire (32).

13. Marchepied extractible selon l'une quelconque des revendications précédentes, **caractérisé en ce que** le dispositif d'extraction (4) présente un système de capteurs (39) détectant les mouvements de l'élément formant marche (3).

14. Marchepied extractible selon l'une quelconque des revendications précédentes, **caractérisé en ce que** le dispositif d'extraction (4), en particulier le châssis (5), est réalisé pour un agencement suspendu sur la face inférieure d'une carrosserie de véhicule d'un véhicule routier (2).

15. Véhicule routier, en particulier camping-car motorisé ou caravane, comprenant une carrosserie de véhicule et un marchepied extractible (1), **caractérisé en ce que** le marchepied extractible (1) est réalisé selon l'une quelconque des revendications 1 à 14.
